(19) Europäisches Patentamt
European Patent Office
Office européen des brevets

(11) EP 3 488 699 A1

(12) EUROPEAN PATENT APPLICATION
published in accordance with Art. 153(4) EPC

(43) Date of publication:
29.05.2019 Bulletin 2019/22

(21) Application number: 17830727.8

(22) Date of filing: 05.06.2017

(51) Int Cl.:
*A01N 59/16* (2006.01) *A01N 25/34* (2006.01)
*A01P 3/00* (2006.01) *B32B 27/18* (2006.01)

(86) International application number:
PCT/JP2017/020801

(87) International publication number:
WO 2018/016207 (25.01.2018 Gazette 2018/04)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
MA MD

(30) Priority: 21.07.2016 JP 2016143337

(71) Applicant: FUJIFILM Corporation
Tokyo 106-8620 (JP)

(72) Inventors:
- ISOBE Yu
Kanagawa 258-8577 (JP)
- OKAZAKI Kentaro
Kanagawa 258-8577 (JP)

(74) Representative: Jeffrey, Philip Michael
Dehns Germany
Theresienstraße 6-8
80333 München (DE)

# (54) ANTIBACTERIAL COMPOSITION, ANTIBACTERIAL FILM, SUBSTRATE WITH ANTIBACTERIAL FILM, METHOD FOR MANUFACTURING ANTIBACTERIAL FILM, AND METHOD FOR MANUFACTURING SUBSTRATE WITH ANTIBACTERIAL FILM

(57) An antibacterial composition which gives an antibacterial film that exhibits antibacterial action in a sustained manner over a predetermined time and has excellent stability, is provided. An antibacterial film, an antibacterial film-attached substrate, a method for producing an antibacterial film, and a method for producing an antibacterial film-attached substrate are also provided. The antibacterial composition includes an antibacterial agent containing silver, a monomer containing a hydrophilic group, and a water-insoluble nitrogen-containing compound.

EP 3 488 699 A1

## Description

## BACKGROUND OF THE INVENTION

1. Field of the Invention

The present invention relates to an antibacterial composition, an antibacterial film, an antibacterial film-attached substrate, a method for producing an antibacterial film, and a method for producing an antibacterial film-attached substrate.

2. Description of the Related Art

As a technology for preventing an article such as a touch panel from being contaminated by bacteria and the like, attention has been paid to a technology of providing an antibacterial film on the surface of the article (hereinafter, also referred to as "substrate").

In JP2015-189196A, an antibacterial film-attached substrate in which an antibacterial film has been formed by applying a composition including a hydrophilic monomer and a silver-based antibacterial agent at a predetermined position on a substrate, forming a coating film, and subjecting the coating film to a curing treatment, is described.

## SUMMARY OF THE INVENTION

The inventors of the present invention conducted an investigation on changes over time in the antibacterial properties of the antibacterial film-attached substrate described in JP2015-189196A. As a result, it was found that the antibacterial film-attached substrate described in JP2015-189196A exhibits antibacterial action within a short time period from the initiation of use; however, thereafter, there is room for an improvement in the antibacterial action after a lapse of a certain time. The inventors of the present invention also conducted an investigation on the stability over time of the composition including a hydrophilic monomer and a silver-based antibacterial agent described in JP2015-189196A (hereinafter, simply referred to as "composition" in the present paragraph). As a result, it was found that the composition described in JP2015-189196A is susceptible to discoloration in a case in which a certain time passes after production of the composition, and the components are prone to be settled. That is, it was found that there is room for an improvement in terms of stability of the composition (the composition is not likely to undergo discoloration, and the components of the composition are not likely to be settled).

Thus, it is an object of the invention to provide an antibacterial composition that gives an antibacterial film capable of exhibiting antibacterial action in a sustained manner over a predetermined time period and having excellent stability (hereinafter, also described as "having the effects of the invention").

Furthermore, it is another object of the invention to provide an antibacterial film, an antibacterial film-attached substrate, a method for producing an antibacterial film, and a method for producing an antibacterial film-attached substrate.

The inventors of the present invention conducted a thorough investigation in order to achieve the objects described above. As a result, the inventors found that an antibacterial composition comprising an antibacterial agent containing silver, a monomer containing a hydrophilic group, and a water-insoluble nitrogen-containing compound, can solve the problems described above, thus completing the invention.

That is, the objects described above can be achieved by the following configurations.

[1] An antibacterial composition comprising an antibacterial agent containing silver, a monomer containing a hydrophilic group, and a water-insoluble nitrogen-containing compound.

[2] The antibacterial composition according to [1], wherein the mass ratio of the content of silver with respect to the content of the water-insoluble nitrogen-containing compound is 0.02 to 0.3.

[3] The antibacterial composition according to [1] or [2], wherein in a case in which the water-insoluble nitrogen-containing compound is dissolved in propylene glycol monomethyl ether to obtain a solution having a solid content of 1% by mass, the viscosity of the solution measured at 25°C using a rotary viscometer is 10 mPa·s or higher.

[4] The antibacterial composition according to any one of [1] to [3], wherein the water-insoluble nitrogen-containing compound contains a urethane bond.

[5] The antibacterial composition according to any one of [1] to [4], wherein the antibacterial agent containing silver contains a carrier and silver supported on the carrier, and the carrier is at least one selected from the group consisting of a phosphoric acid salt and a zeolite.

[6] The antibacterial composition according to any one of [1] to [5], wherein two or more kinds of monomers containing a hydrophilic group are provided.

[7] The antibacterial composition according to [6], wherein at least one kind of the monomers containing a hydrophilic group contains at least one polyoxyalkylene group and two or more polymerizable groups in one molecule.
[8] The antibacterial composition according to any one of [1] to [6], wherein the monomer containing a hydrophilic group contains at least one polyoxyalkylene group and two or more polymerizable groups in one molecule.
[9] An antibacterial film obtainable by curing the antibacterial composition according to any one of [1] to [8].
[10] The antibacterial film according to [9], wherein the film thickness is 1 to 10 μm.
[11] An antibacterial film-attached substrate comprising a substrate and the antibacterial film according to [9] or [10].
[12] A method for producing an antibacterial film, the method comprising applying the antibacterial composition according to any one of [1] to [8] on the surface of a substrate to form an antibacterial composition layer; and curing the antibacterial composition layer to obtain an antibacterial film.
[13] A method for producing an antibacterial film-attached substrate, the method comprising forming the antibacterial film according to [9] or [10] on the surface of a substrate.
[14] The method for producing an antibacterial film-attached substrate according to [13], wherein forming the antibacterial film is applying the antibacterial composition according to any one of [1] to [8] on the surface of the substrate to form an antibacterial composition layer, and curing the antibacterial composition layer to obtain an antibacterial film.

According to the invention, an antibacterial composition that gives an antibacterial film capable of exhibiting antibacterial action in a sustained manner over a predetermined time period and having excellent stability, can be provided.
Furthermore, according to the invention, an antibacterial film, an antibacterial film-attached substrate, a method for producing an antibacterial film, and a method for producing an antibacterial film-attached substrate can be provided.

## DESCRIPTION OF THE PREFERRED EMBODIMENTS

In the following description, the invention will be explained in more detail.
The explanation of the constituent elements described below may be based on representative embodiments of the invention; however, the present invention is not intended to be limited to those embodiments.
According to the present specification, a value range described using the symbol "~" means a range including the numerical values described before and after the symbol "~" as the lower limit and the upper limit.
In regard to the description of a group (atomic group) according to the present specification, a description that does not denote substitution or unsubstitution is meant to include a group which does not contain a substituent as well as a group which contains a substituent. For example, the description "alkyl group" includes not only an alkyl group that does not contain a substituent (unsubstituted alkyl group) but also an alkyl group containing a substituent (substituted alkyl group).
According to the present specification, the description "(meth)acrylate" represents acrylate and methacrylate. According to the present specification, the description "(meth)acryloyl" represents acryloyl and methacryloyl.

[Antibacterial composition]

The antibacterial composition according to an embodiment includes an antibacterial agent containing silver (hereinafter, also referred to as "silver-based antibacterial agent"), a monomer containing a hydrophilic group, and a water-insoluble nitrogen-containing compound.
The mechanism by which the above-described antibacterial composition provides the effects of the invention is not clearly understood; however, the inventors of the present invention speculate the mechanism as follows. In addition, the invention is not intended to be limited such that the effects are obtainable only by the following mechanism.
The inventors of the present invention conducted a thorough investigation on the cause by which the antibacterial film-attached substrate according to JP2015-189196A may have antibacterial action that is deteriorated after a certain time passes from the initiation of use. As a result, the inventors found for the first time that the above-described cause lies in that the rate at which silver ions are eluted from the silver-based antibacterial agent included in the antibacterial film is too fast. That is, the inventors found that in a case in which the rate at which silver ions are eluted is too fast, an excess amount of silver ions are eluted in a short time period from the initiation of use, the antibacterial action is likely to be deteriorated after a lapse of a certain time. Whether the rate at which silver ions are eluted is appropriate can be determined based on the temporal interval for the division of general bacteria (for example, about 20 minutes in the case of Escherichia coli; hereinafter, referred to as "division interval" in the present paragraph). That is, since silver ions that have been released in a time shorter than the division interval do not easily contribute to the antibacterial action, it can be determined that the rate at which silver ions are eluted is fast.
According to the findings as described above, it was suggested that in order to solve the problems, it is necessary to release silver ions in a controlled manner from the silver-based antibacterial agent (controlled release characteristics)

in accordance with the division interval of bacteria.

The antibacterial composition according to the embodiment described above includes a water-insoluble nitrogen-containing compound. It is speculated that the water-insoluble nitrogen-containing compound forms a complex containing Ag-N with silver ion. It is speculated that in a case in which silver ion forms the complex, at the time of forming an antibacterial film using the antibacterial composition, the rate at which silver ions are released out of the antibacterial film is suppressed. In other words, it is speculated that silver ions are released in a controlled manner by way of the aforementioned complex.

Therefore, an antibacterial film formed using the antibacterial composition can exhibit antibacterial action in a sustained manner over a predetermined time.

It is speculated that the water-insoluble nitrogen-containing compound has an action of increasing the viscosity of the antibacterial composition, and the water-insoluble nitrogen-containing compound contributes to suppression of sedimentation of components through this action.

It is speculated that the water-insoluble nitrogen-containing compound also has an unexpected action of preventing discoloration of the antibacterial composition.

The inventors of the present invention found that silver ions aggregate to form silver metal (this state is referred to as "nanosilver"), as one of the causes of discoloration of an antibacterial composition including an antibacterial agent containing silver.

It is speculated that in a case in which silver ions aggregate into a cluster form in an antibacterial composition and are subjected to reduction, the aforementioned nanosilver (for example, spherical nanosilver particles) are produced.

It is speculated that since water-insoluble nitrogen-containing compound can easily form a complex with the silver ion, the water-insoluble nitrogen-containing compound has an action of preventing discoloration caused by formation of the nanosilver.

As described above, it is speculated that the water-insoluble nitrogen-containing compound not only suppresses sedimentation of the components of the antibacterial composition by increasing the viscosity of the antibacterial composition, but also has an unexpected effect of preventing the formation of nanosilver by forming a complex with silver ion and thereby enhancing the stability of the antibacterial composition.

In the following description, various components of the antibacterial composition according to the embodiment described above will be explained.

[Antibacterial agent containing silver (silver-based antibacterial agent)]

The antibacterial composition includes an antibacterial agent containing silver (hereinafter, also referred to as "silver-based antibacterial agent"). The antibacterial agent containing silver is not particularly limited, and any known antibacterial agent can be used.

The form of silver is not particularly limited, and examples include silver metal, silver ion, and a silver salt (including a silver complex). According to the present specification, a silver complex is included in the range of silver salt.

The silver salt is not particularly limited, and examples include silver acetate, silver acetylacetonate, silver azide, silver acetylide, silver arsenate, silver benzoate, silver hydrogen fluoride, silver bromate, silver bromide, silver carbonate, silver chloride, silver chlorate, silver chromate, silver citrate, silver cyanate, silver cyanide, silver (cis,cis-1 ,5-cyclooctadiene)-1,1,1,5,5,5-hexafluoroacetylacetonate, silver diethyldithiocarbamate, silver(I) fluoride, silver(II) fluoride, silver 7,7-dimethyl-1,1,1,2,2,3,3-heptafluoro-4,6-octanedionate, silver hexafluoroantimonate, silver hexafluoroarsenate, silver hexafluorophosphate, silver iodate, silver iodide, silver isothiocyanate, potassium silver cyanide, silver lactate, silver molybdate, silver nitrate, silver nitrite, silver(I) oxide, silver(II) oxide, silver oxalate, silver perchlorate, silver perfluorobutyrate, silver perfluoropropionate, silver permanganate, silver perrhenate, silver phosphate, silver picrate monohydrate, silver propionate, silver selenate, silver selenide, silver selenite, sulfadiazine silver, silver sulfate, silver sulfide, silver sulfite, silver telluride, silver tetrafluoroborate, silver tetraiodomercurate, silver tetratungstate, silver thiocyanate, silver p-toluenesulfonate, silver trifluoromethanesulfonate, silver trifluoroacetate, and silver vanadate.

The silver complex is not particularly limited, and examples include a histidine-silver complex, a methionine-silver complex, a cysteine-silver complex, an aspartic acid-silver complex, a pyrrolidonecarboxylic acid-silver complex, an oxotetrahydrofurancarboxylic acid-silver complex, and an imidazole-silver complex.

Examples of the silver-based antibacterial agent include organic antibacterial agents such as the above-described silver salts (silver complexes); and inorganic antibacterial agents including the carriers that will be described below. However, the type of the silver-based antibacterial agent is not particularly limited.

Among them, from the viewpoint that the antibacterial composition has superior effects of the invention, the silver-based antibacterial agent is preferably an inorganic antibacterial agent, and more preferably a silver-supported carrier containing a carrier and silver supported on the carrier.

The type of the carrier is not particularly limited, and examples include phosphoric acid salts such as zinc-calcium phosphate, calcium phosphate, zirconium phosphate, aluminum phosphate, and titanium phosphate; calcium

silicate, activated carbon, activated alumina, silica gel, zeolite, hydroxyapatite, potassium titanate, bismuth oxide hydrate, zirconium oxide hydrate, hydrotalcite, and glass (including water-soluble glass).

Among them, from the viewpoint that the antibacterial composition acquires superior effects of the present invention, the carrier is preferably zinc-calcium phosphate, calcium phosphate, zirconium phosphate, aluminum phosphate, zeolite, or glass, and from the viewpoint that the carrier is not deliquescent, and the antibacterial composition has superior stability, the carrier is preferably zinc calcium phosphate, calcium phosphate, zirconium phosphate, aluminum phosphate, or zeolite.

That is, the antibacterial agent containing silver is preferably an antibacterial agent comprising a carrier and silver supported on the carrier, in which the carrier is at least one selected from the group consisting of a phosphoric acid salt and a zeolite, from the viewpoint that the antibacterial composition acquires superior stability. Preferred examples of the phosphoric acid salt include zinc calcium phosphate, calcium phosphate, zirconium phosphate, and aluminum phosphate.

In the present specification, a silver-based antibacterial agent comprising a carrier formed from a phosphoric acid salt will be referred to as "silver phosphate antibacterial agent".

In the present specification, a silver-based antibacterial agent comprising a carrier formed from a zeolite will be referred to as "silver zeolite antibacterial agent".

Examples of the zeolite include natural zeolites such as chabazite, mordenite, erionite, and clinoptilolite; and synthetic zeolites such as type A zeolite, type X zeolite, and type Y zeolite.

The average particle size of the silver-based antibacterial agent is not particularly limited; however, generally, the average particle size is preferably 0.1 to 10 $\mu$m, and more preferably 0.1 to 2 $\mu$m. The aforementioned average particle size is a value obtained by observing a silver-based antibacterial agent using an optical microscope, measuring the diameters of at least ten arbitrary particles (primary particles) of the silver-based antibacterial agent, and calculating an arithmetic average of those diameters.

The content of silver in the silver-based antibacterial agent is not particularly limited; however, the content of silver is preferably 0.1% to 10% by mass, and more preferably 0.3% to 5% by mass, with respect to the total mass of the silver-based antibacterial agent.

The content of the silver-based antibacterial agent in the antibacterial composition is not particularly limited; however, generally, an amount that provides a silver content of 0.001% to 10% by mass (preferably 0.01% to 5% by mass) with respect to the total solid content of the antibacterial composition is preferred.

In a case in which an organic antibacterial agent is used as the silver-based antibacterial agent, the content of the antibacterial agent is not particularly limited; however, from the viewpoint that the antibacterial film thus obtainable acquires superior mechanical strength, and superior effects of the invention are obtained, the content of the organic antibacterial agent is preferably 1% to 10% by mass with respect to the total solid content of the antibacterial composition.

Furthermore, in the case of using an inorganic antibacterial agent as the silver-based antibacterial agent, the content of the antibacterial agent is not particularly limited; however, from the viewpoint that the antibacterial film thus obtainable acquires superior mechanical strength, and superior effects of the invention are obtained, the content of the inorganic antibacterial agent is preferably 0.01% to 20% by mass, and more preferably 0.1% to 10% by mass, with respect to the total solid content of the antibacterial composition.

In regard to the relation between the content of the silver-based antibacterial agent and the content of the water-insoluble nitrogen-containing compound that will be described below, the mass ratio of the content of silver with respect to the content of the water-insoluble nitrogen-containing compound (content (mass) of silver / content (mass) of water-insoluble nitrogen-containing compound) is preferably 0.02 to 0.3, and more preferably 0.05 to 0.2.

In a case in which the mass ratio of the contents described above is in the range of 0.02 to 0.3, the antibacterial film obtainable from the antibacterial composition may exhibit antibacterial action in a sustained manner more easily.

[Monomer containing hydrophilic group (hydrophilic monomer)]

The antibacterial composition comprises a monomer containing a hydrophilic group (hereinafter, also referred to as "hydrophilic monomer"). The monomer containing a hydrophilic group is intended to mean a compound containing a hydrophilic group and a polymerizable group.

The hydrophilic monomer has an effect as a binder, and in a case in which the antibacterial composition comprises the polymerization initiator that will be described below, the hydrophilic monomer is polymerized to form a hydrophilic polymer.

In a case in which the antibacterial film obtainable from the antibacterial composition contains a hydrophilic polymer, the antibacterial film exhibits stronger hydrophilicity. Thus, in a case in which the antibacterial film is washed using water or the like, contaminants adhering onto the antibacterial film can be removed more easily.

The hydrophilic group is not particularly limited, and examples include a polyoxyalkylene group (for example, a polyoxyethylene group, a polyoxypropylene group, or a polyoxyalkylene group in which oxyethylene groups and oxypropylene groups are bonded in a block-like fashion or in a random fashion), an amino group, a carboxyl group, an alkali metal salt of a carboxy group, a hydroxyl group, an alkoxy group, an amide group, a carbamoyl group, a sulfonamide group, a sulfamoyl group, a phosphoric acid group, a sulfonic acid group, and an alkali metal salt of a sulfonic acid group. Among them, from the viewpoint that the antibacterial film obtainable from the antibacterial composition acquires superior hard coating performance and/or curling resistance, the hydrophilic group is preferably a polyoxyalkylene group. The hard coating performance and curling resistance are intended to mean physical properties of the antibacterial film that can be evaluated by the methods described in the Examples.

The number of hydrophilic groups in the hydrophilic monomer is not particularly limited; however, from the viewpoint that the antibacterial film thus obtainable exhibits stronger hydrophilicity, the number of hydrophilic groups is preferably 2 or larger, more preferably 2 to 6, and even more preferably 2 to 3.

The structure of the main chain of the hydrophilic polymer is not particularly limited, and examples include polyurethane, poly(meth)acrylate, polystyrene, polyester, polyamide, polyimide, and polyurea.

The polymerizable group is not particularly limited, and examples include a radical polymerizable group, a cationic polymerizable group, and an anionic polymerizable group. Examples of the radical polymerizable group include a (meth)acryloyl group, an acrylamide group, a vinyl group, a styryl group, and an allyl group. Examples of the cationic polymerizable group include a vinyl ether group, an oxiranyl group, and an oxetanyl group. Among them, a (meth)acryloyl group is preferred.

The number of polymerizable groups in the hydrophilic monomer is not particularly limited; however, from the viewpoint that the antibacterial film thus obtainable acquires superior mechanical strength, the number of polymerizable groups is preferably 2 or larger, more preferably 2 to 6, and even more preferably 2 to 3.

It is preferable that the monomer containing a hydrophilic group contains at least one polyoxyalkylene group and two or more polymerizable groups in one molecule.

It is preferable that the antibacterial composition comprises two or more kinds of hydrophilic monomers.

The upper limit of the number of kinds of the hydrophilic monomers included in the antibacterial composition is not particularly limited, and generally, five or fewer kinds of hydrophilic monomers are preferred.

In a case in which the antibacterial composition comprises two or more kinds of hydrophilic monomers, the antibacterial film obtainable from the antibacterial composition acquires superior antibacterial properties.

In a case in which the antibacterial composition comprises two or more kinds of hydrophilic monomers, it is preferable that at least one of the monomers containing a hydrophilic group contains at least one polyoxyalkylene group and two or more polymerizable groups in one molecule.

The antibacterial film obtainable from the above-described antibacterial composition comprising a hydrophilic monomer has superior hard coating performance and low curling properties.

(Suitable embodiment of hydrophilic monomer)

One of suitable embodiments of the hydrophilic monomer may be a compound represented by the following Formula (1).

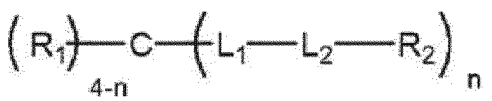 Formula (1)

In Formula (1), $R_1$ represents a substituent. The type of the substituent is not particularly limited, and any known substituent may be used. Examples include a hydrocarbon group (for example, an alkyl group or an aryl group) which may have a heteroatom, and the above-mentioned hydrophilic groups.

$R_2$ represents a polymerizable group. The definition for the polymerizable group is as described above.

$L_1$ represents a single bond or a divalent linking group. The type of the divalent linking group is not particularly limited, and examples include -O-, -CO-, -NH-, -CO-NH-, -COO-, -O-COO-, an alkylene group, an arylene group, a heteroarylene group, and combinations thereof.

$L_2$ represents a polyoxyalkylene group. The polyoxyalkylene group is intended to mean a group represented by the following Formula (2).

Formula (2) $*\text{-}(OR_3)_m\text{-}*$

In Formula (2), $R_3$ represents an alkylene group (for example, an ethylene group or a propylene group). m represents an integer of 2 or greater, preferably 2 to 10, and more preferably 2 to 6. The symbol * represents a position of bonding. n represents an integer from 1 to 4.

Specific examples of the hydrophilic monomer include polyoxyalkylene-modified pentaerythritol triacrylate and polyoxyalkylene-modified bisphenol A diacrylate.

The content of the hydrophilic monomer in the antibacterial composition is not particularly limited; however, from the viewpoint of obtaining an antibacterial composition having superior effects of the invention, the content of the hydrophilic monomer is preferably 0.1% to 50% by mass, and more preferably 1% to 25% by mass, with respect to the total solid content of the antibacterial composition.

The hydrophilic monomers may be used singly, or two or more kinds thereof may be used in combination. In a case in which two or more kinds of hydrophilic monomers are used in combination, it is preferable that the total content is in the range described above.

[Water-insoluble nitrogen-containing compound]

The antibacterial composition comprises a water-insoluble nitrogen-containing compound. According to the present specification, the term water-insoluble is intended to mean being substantially insoluble in water. Being substantially insoluble in water is intended to mean that the amount of dissolution measured by the following test method is 0.1 g or less.

• Test method

Under the conditions of 25°C, 0.5 g of a nitrogen-containing compound is added to 100 g of distilled water, and the mixture is stirred for 5 minutes to obtain a solution. The solution thus obtained is filtered, and a solid is obtained. The solid is dried for 60 minutes at 105°C, and an insoluble fraction is obtained. This is weighed. The amount of dissolution is calculated by the following formula.

$$\text{(Formula) Amount of dissolution (g)} = 0.5 - \text{insoluble fraction}$$

The nitrogen-containing compound is intended to mean a compound containing a nitrogen atom in that structure.

The embodiment of the compound containing a nitrogen atom is not particularly limited; however, for example, a compound having a substituent containing a nitrogen atom may be mentioned. The substituent is not particularly limited; however, examples include a cyano group, an amino group (primary, secondary, or tertiary), an azide group, an azo group, an amide group, a urethane group (urethane bond), a urea group, and an aromatic heterocyclic group containing a nitrogen atom.

Among them, from the viewpoint that an antibacterial composition having superior effects of the invention is obtained, it is preferable that the water-insoluble nitrogen-containing compound contains a urethane bond.

It is preferable that the water-insoluble nitrogen-containing compound has the following viscosity characteristics. A water-insoluble nitrogen-containing compound having the following viscosity characteristics is likely to increase the viscosity of the antibacterial composition. Therefore, an antibacterial composition comprising a water-insoluble nitrogen-containing compound having the following viscosity characteristics has superior stability. In the present specification, a water-insoluble nitrogen-containing compound having the following viscosity characteristics is also referred to as "thickening agent".

• Viscosity characteristics

In a case in which a water-insoluble nitrogen-containing compound is dissolved in propylene glycol monomethyl ether to obtain a solution having a solid content of 1% by mass, the viscosity of the solution at 25°C as measured using a rotary viscometer is 10 mPa·s or higher.

The viscosity of the solution at 25°C as measured using a rotary viscometer is preferably 10 mPa·s or higher, and more preferably 15 mPa·s or higher. The upper limit of the viscosity is not particularly limited; however, from the viewpoint of handleability, the viscosity is preferably 500 mPa·s or lower.

In the present paragraph, excellent handleability is intended to mean a state in which, at the time of producing an antibacterial composition, the water-insoluble nitrogen-containing compound can be easily mixed with other various components.

The content of the water-insoluble nitrogen-containing compound is not particularly limited; however, the content of the water-insoluble nitrogen-containing compound is preferably 0.1% to 10% by mass, and more preferably 0.5% to 7% by mass, with respect to the total solid content of the antibacterial composition. Furthermore, it is preferable that the mass ratio of the content of silver to the content of the water-insoluble nitrogen-containing compound is as described

above.

The water-insoluble nitrogen-containing compounds may be used singly, or two or more kinds thereof may be used in combination. In a case in which two or more kinds of water-insoluble nitrogen-containing compounds are used in combination, it is preferable that the total content is in the range described above.

Specific examples of the water-insoluble nitrogen-containing compound include, for example, BYK-D410 (manufactured by BYK Chemie GmbH, containing a urethane bond; the viscosity measured by the above-described method is 28 mPa·s, and the compound corresponds to a thickening agent), DISPARLON PFA-231 (manufactured by Kusumoto Chemicals, Ltd., not containing a urethane bond; the viscosity measured by the above-described method is 17 mPa·s, and the compound corresponds to a thickening agent), and TINUVIN PS (manufactured by BASF SE, not containing a urethane bond; the viscosity measured by the above-described method is 2.1 mPa·s, and the compound corresponds to a thickening agent); however, the examples are not limited to these.

[Other components]

The antibacterial composition may further comprise other components to the extent that the effects of the invention are provided. Examples of the other components include a monomer that does not contain a hydrophilic group, a polymerization initiator, a solvent, a dispersant, a discoloration inhibitor, and an antibacterial agent (excluding a silver-based antibacterial agent). In the following description, embodiments of various other components will be explained.

<Monomer that does not contain hydrophilic group>

It is preferable that the antibacterial composition comprises a monomer other than a hydrophilic monomer.

The aforementioned monomer is a monomer that does not contain a hydrophilic group, and the monomer is intended to mean a monomer different from the above-mentioned hydrophilic monomer.

The monomer is not particularly limited, and any known monomer containing a polymerizable group can be used. For example, regarding the polymerizable group, those described above may be mentioned.

Above all, the aforementioned monomer is preferably a polyfunctional monomer containing two or more polymerizable groups in one molecule, from the viewpoint that the antibacterial film thus obtainable acquires superior mechanical strength. A polyfunctional monomer acts as a so-called crosslinking agent.

The number of polymerizable groups included in the polyfunctional monomer is not particularly limited, and from the viewpoint that the antibacterial film thus obtainable acquires superior mechanical strength, and from the viewpoint that handling of the polyfunctional monomer itself is easy, the number of polymerizable groups is preferably 2 to 10, and more preferably 2 to 6.

Examples of the polyfunctional monomer include trimethylolpropane triacrylate, tetramethylolmethane tetraacrylate, dipentaerythritol polyacrylate (for example, dipentaerythritol pentaacrylate or dipentaerythritol hexaacrylate), and pentaerythritol tetraacrylate.

The mass ratio of the content of the hydrophilic monomer with respect to the content of the monomer that does not contain a hydrophilic group (mass of hydrophilic monomer / mass of monomer that does not contain hydrophilic group) in the antibacterial composition is not particularly limited; however, from the viewpoint that it is easy to control the hydrophilicity of the antibacterial film thus obtainable, the mass ratio is preferably 0.01 to 10, and more preferably 0.1 to 10.

The total amount of the hydrophilic monomer and the monomer that does not contain a hydrophilic group in the antibacterial composition is not particularly limited; however, from the viewpoint that the antibacterial film thus obtainable has superior dirt removal characteristics, the total amount is preferably 60% to 99.9% by mass, and more preferably 80% to 98% by mass, with respect to the total solid content of the antibacterial composition.

<Polymerization initiator>

It is preferable that the antibacterial composition further comprises a polymerization initiator. The antibacterial film obtainable from an antibacterial composition comprising a polymerization initiator has superior mechanical strength.

The polymerization initiator is not particularly limited, and any known polymerization initiator can be used.

Examples of the polymerization initiator include a thermal polymerization initiator and a photopolymerization initiator.

Examples of the polymerization initiator include aromatic ketones such as benzophenone and phenylphosphine oxide; $\alpha$-hydroxyalkylphenone-based compounds (manufactured by BASF SE, IRGACURE 184, 127, and 2959, DAROCUR 1173, and the like); and phenylphosphine oxide-based compounds (monoacylphosphine oxide: IRGACURE TPO manufactured by BASF SE, bisacylphosphine oxide: IRGACURE 819 manufactured by BASF SE).

Among them, from the viewpoint of the reaction efficiency, a photopolymerization initiator is preferred.

The content of the polymerization initiator in the antibacterial composition is not particularly limited; however, the content of the polymerization initiator is preferably 0.1 to 15 parts by mass, and more preferably 1 to 6 parts by mass, with respect to 100 parts by mass of the total amount of the hydrophilic monomer and the monomer that does not contain a hydrophilic group.
The polymerization initiators may be used singly, or two or more kinds thereof may be used in combination. In a case in which two or more kinds of polymerization initiators are used in combination, it is preferable that the total content is in the range described above.

<Solvent>

It is preferable that the antibacterial composition comprises a solvent.
The solvent is not particularly limited, and water and/or an organic solvent may be used. Examples of the organic solvent include alcohol-based solvents such as methanol, ethanol, n-propanol, isopropanol, n-butanol, isobutanol, sec-butanol, tert-butanol, n-pentanol, and isopentanol; glycol ether-based solvents such as methyl cellosolve, ethyl cellosolve, ethylene glycol dimethyl ether, ethylene glycol diethyl ether, propylene glycol monomethyl ether, propylene glycol monoethyl ether, propylene glycol monopropyl ether, propylene glycol dimethyl ether, and propylene glycol diethyl ether; aromatic hydrocarbon-based solvents such as benzene, toluene, xylene, and ethylbenzene; alicyclic hydrocarbon-based solvents such as cyclopentane, cyclohexane, methylcyclohexane, and ethylcyclohexane; ether-based solvents such as tetrahydrofuran, dioxane, diisopropyl ether, and di-n-butyl ether; ketone-based solvents such as acetone, methyl ethyl ketone, and methyl isobutyl ketone; and ester-based solvents such as methyl acetate, ethyl acetate, n-propyl acetate, isopropyl acetate, n-butyl acetate, isobutyl acetate, n-amyl acetate, isoamyl acetate, hexyl acetate, ethyl propionate, and butyl propionate. The solvents may be used singly, or two or more kinds thereof may be used in combination.
Among them, from the viewpoint that an antibacterial film having a more uniform film thickness is easily obtained, it is preferable that the solvent includes an organic solvent; it is more preferable that the solvent includes an alcohol-based solvent and/or a glycol ether-based solvent; and it is even more preferable that the solvent includes an alcohol-based solvent and a glycol ether solvent.
The solid content of the antibacterial composition is not particularly limited; however, from the viewpoint that the antibacterial composition has superior coating performance, the solid content is preferably 5% to 80% by mass, and more preferably 20% to 60% by mass. It is preferable that the antibacterial composition includes a solvent so as to obtain the above-described solid content.
The solvents may be used singly, or two or more kinds thereof may be used in combination. In a case in which two or more kinds of solvents are used in combination, it is preferable that the total content is in the range described above.

<Dispersant and discoloration inhibitor>

The antibacterial composition may comprise a dispersant and/or a discoloration inhibitor. The dispersant and the discoloration inhibitor are intended to mean compounds different from the water-insoluble nitrogen-containing compound.
The dispersant is not particularly limited, and any known dispersant can be used.
Examples of the dispersant include DISPERBYK-180 (manufactured by BYK Chemie GmbH, water-soluble, alkylolammonium salt).
The discoloration inhibitor is not particularly limited, and any known discoloration inhibitor can be used.
Examples of the discoloration inhibitor include sodium 3-mercapto-1-propanesulfonate (manufactured by Tokyo Chemical Industry Co., Ltd.).
The content of the dispersant in the antibacterial composition is not particularly limited; however, generally, the content of the dispersant is preferably 0.01% to 5% by mass with respect to the total solid content of the antibacterial composition.
The content of the discoloration inhibitor in the antibacterial composition is not particularly limited; however, generally, the content of the discoloration inhibitor is preferably 0.1% to 5% by mass with respect to the total solid content of the antibacterial composition.
The dispersants and/or discoloration inhibitors may be respectively used singly, or two or more kinds thereof may be used in combination. In the case of using two or more kinds of dispersants and/or discoloration inhibitors in combination, it is preferable that the respective total contents are in the ranges described above.

<Antibacterial agent (excluding silver-based antibacterial agent)>

The antibacterial composition may comprise an antibacterial agent that is different from the silver-based antibacterial agent.

The antibacterial agent different from the silver-based antibacterial agent is not particularly limited, and any known antibacterial agent can be used.

Examples of the antibacterial agent include antibacterial agents containing a metal such as zinc, iron, lead, bismuth, titanium, tin, or nickel. The form of the metal is not particularly limited, and examples include forms such as metal particles, metal ions, and metal salts (including metal complexes).

The antibacterial agent containing a metal may be a metal-supporting simple substance including a carrier and the above-mentioned metal supported on the carrier. Regarding the embodiment of the carrier, those described above as the carrier for the silver-based antibacterial agent may be mentioned.

The content of the antibacterial agent different from the silver-based antibacterial agent is not particularly limited, and the content is preferably 0.01% to 5% by mass with respect to the total solid content of the antibacterial composition.

The antibacterial agents different from the silver-based antibacterial agent may be used singly, or two or more kinds thereof may be used in combination. In a case in which two or more kinds of antibacterial agents different from the silver-based antibacterial agent are used in combination, it is preferable that the total content is in the range described above.

[Method for producing antibacterial composition]

The antibacterial composition may be produced by mixing the various components described above. The order of mixing of the above-described components is not particularly limited; however, an embodiment of mixing a hydrophilic monomer and, if necessary, a monomer that does not contain a hydrophilic group in a solvent to obtain a mixture, and mixing this mixture with other components is also acceptable. At that time, the solvent used for mixing, if necessary, the hydrophilic monomer with the monomer that does not contain a hydrophilic group, and the solvent used for mixing this mixture with other components may be identical or different.

In a case in which the antibacterial composition includes a dispersant, antibacterial agent particles containing a metal and a dispersant may be mixed first, and thereby the antibacterial agent particles containing a metal may be dispersed in the dispersant.

[Use applications of antibacterial composition]

The antibacterial composition can be used for the production of an antibacterial film and for the production of an antibacterial film-attached substrate. More specifically, for example, an embodiment of producing an ink including the antibacterial composition, and forming an antibacterial film (antibacterial coating) on the surface of a substrate (for example, paper may be mentioned. On the paper surface, some characters and/or drawn images may be printed) by an inkjet method or the like, may be mentioned.

For the formation of an antibacterial film, a method of irradiating an antibacterial composition layer with UV (ultraviolet) may be used. That is, the antibacterial composition can also be used as a UV inkjet ink.

[Antibacterial film]

The antibacterial film according to another embodiment is an antibacterial film obtainable by curing an antibacterial composition. The antibacterial composition is as explained above.

The film thickness of the antibacterial film is not particularly limited; however, the film thickness is preferably 0.1 to 15 μm, and more preferably 1 to 10 μm.

In a case in which the film thickness is 1 μm or more, the antibacterial film has superior hard coating performance.

On the other hand, in a case in which the film thickness is 10 μm or less, the antibacterial film has superior curling resistance.

According to the present specification, the film thickness of an antibacterial film is measured by embedding a sample piece of the antibacterial film in a resin, shaving cross-sections with a microtome, and observing the shaved cross-sections with a scanning electron microscope. The film thickness is intended to mean a value obtained by measuring the thicknesses at any arbitrary ten positions of the antibacterial film and calculating an arithmetic mean of those values.

[Antibacterial film-attached substrate]

The antibacterial film-attached substrate according to another embodiment includes a substrate and the above-described antibacterial film. It is preferable that the antibacterial film-attached substrate is a laminate including a substrate and an antibacterial film. Examples of the embodiment of the antibacterial film-attached substrate include an embodiment including an antibacterial film on the surface of at least a portion of a substrate, an embodiment including an antibacterial

film on one surface of a substrate, and an embodiment including an antibacterial film on both surfaces of a substrate.

[Substrate]

The type of the substrate is not particularly limited as long as the substrate can accomplish the role of supporting an antibacterial film. The substrate may construct a portion of various apparatuses (for example, a front surface plate).
The shape of the substrate is not particularly limited; however, examples include a plate form, a film form, a sheet form, a tube form, a fiber form, and a particulate form. The form of the substrate surface on which an antibacterial film is disposed is not particularly limited, and examples include a flat surface, a concave surface, a convex surface, and combinations thereof.
The material that constitutes the substrate is not particularly limited, and examples include a metal, glass, a ceramic, and a plastic (resin). Among them, a plastic is preferred from the viewpoint of handleability. In other words, a resin substrate is preferred.

[Method for producing antibacterial film]

The method for producing an antibacterial film according to another embodiment includes the following steps:

(Step A) a step of applying an antibacterial composition on the surface of a substrate and forming an antibacterial composition layer; and
(Step B) a step of curing the antibacterial composition layer and obtaining an antibacterial film.

(Step A)

Step A is a step of applying an antibacterial composition on the surface of a substrate and forming an antibacterial composition layer. The method of applying an antibacterial composition on the surface of a substrate is not particularly limited, and any known coating method can be used.
Examples of the method of applying an antibacterial composition on the surface of a substrate include a spraying method, a wire bar coating method, an extrusion coating method, a direct gravure coating method, a reverse gravure coating method, an inkjet method, and a die coating method.
The film thickness of the antibacterial composition layer is not particularly limited; however, the film thickness is preferably 0.1 to 15 μm as a dried film thickness.
After the antibacterial composition is applied, the antibacterial composition layer may be subjected to a heating treatment in order to remove the solvent. The conditions for the heating treatment in that case are not particularly limited, and for example, the heating temperature is preferably 50°C to 200°C, while the heating time is preferably 15 to 600 seconds.
Regarding the substrate that can be used for Step A, those mentioned above may be used.

(Step B)

Step B is a step of curing the antibacterial composition layer and obtaining an antibacterial film.
The method of curing the antibacterial composition layer is not particularly limited; however, examples include a heating treatment and/or an exposure treatment.
The exposure treatment is not particularly limited; however, for example, an embodiment of irradiating the antibacterial composition layer with ultraviolet radiation at a dose of 100 to 600 $mJ/cm^2$ using an ultraviolet lamp, and thereby curing the antibacterial composition layer, may be mentioned.
In the case of ultraviolet irradiation, ultraviolet radiation emitted from the light source of an ultrahigh pressure mercury lamp, a high pressure mercury lamp, a low pressure mercury lamp, a carbon arc, a xenon arc, a metal halide lamp, or the like can be utilized.
The temperature for the heating treatment is not particularly limited; however, for example, the temperature is preferably 50°C to 150°C, and more preferably 80°C to 120°C. The time for the heating treatment is not particularly limited; however, for example, the time is preferably 15 to 600 seconds.

[Method for producing antibacterial film-attached substrate]

The method for producing an antibacterial film-attached substrate according to another embodiment is a method for producing an antibacterial film-attached substrate, the method comprising a step of forming an antibacterial film on the surface of a substrate.

The step of forming an antibacterial film is not particularly limited; however, the following several embodiments are preferred. Regarding the substrate, those mentioned above may be used.

<Suitable embodiment 1>

A step of applying an antibacterial composition on the surface of a substrate, forming an antibacterial composition layer, curing the antibacterial composition layer, and thus obtaining an antibacterial film.
The suitable embodiment 1 is similar to the embodiment previously explained as the method for producing an antibacterial film.

<Suitable embodiment 2>

A step of laminating the substrate and the antibacterial film.
Regarding the suitable embodiment 2, a method of applying an adhesive on at least a portion of the substrate and/or the antibacterial film, thus forming an adhesive layer on the substrate and/or the antibacterial film, laminating the substrate and the antibacterial film, and then curing the adhesive as necessary, may be mentioned.
The adhesive is not particularly limited, and any known adhesive can be used.
Examples of the adhesive include a hot melt type, a thermal curing type, a photocuring type, a reaction curing type, and a pressure-sensitive adhesive type that does not require curing. Regarding the materials for the various adhesives, acrylate-based, urethane-based, urethane acrylate-based, epoxy-based, epoxy acrylate-based, polyolefin-based, modified olefin-based, polypropylene-based, ethylene vinyl alcohol-based, vinyl chloride-based, chloroprene rubber-based, cyanoacrylate-based, polyamide-based, polyimide-based, polystyrene-based, and polyvinyl butyral-based compounds can be used.

EXAMPLES

Hereinafter, the invention will be described in more detail based on Examples. The materials, amounts of use, proportions, treatments, procedures, and the like described in the following Examples can be modified as appropriate as long as the gist of the invention is maintained. Therefore, the scope of the invention should not be construed to be limited by the Examples described below.

[Production of monomer mixture]

The various monomers and solvents described in Table 1 were mixed, and mixtures of monomers were obtained.
The various components in the table are as follows.

- NK ESTER (registered trademark) A-9550 (manufactured by Shin Nakamura Chemical Co., Ltd.; dipentaerythritol polyacrylate; a polyfunctional acrylate compound containing a plurality of polymerizable groups in one molecule, specifically a mixture of pentafunctional acrylate and hexafunctional acrylate; corresponds to a monomer that does not contain a hydrophilic group)
- NK ESTER A-GLY-9E (manufactured by Shin Nakamura Chemical Co., Ltd.; ethoxylated glycerin triacrylate; containing three polyoxyalkylene groups and three acryloyl groups in one molecule; corresponds to a hydrophilic monomer)
- LIGHT ACRYLATE (registered trademark) 130A (manufactured by Kyoei Chemical Co., Ltd.; methoxy-polyethylene glycol acrylate; containing one polyoxyalkylene group and one acryloyl group in one molecule; corresponds to a hydrophilic monomer)

- 3-Sulfopropyl acrylate potassium salt (manufactured by Polysciences, Inc.; containing one alkali metal salt of a sulfonic acid group and one acryloyl group in one molecule; corresponds to a hydrophilic monomer)
- PPME (trade name) (manufactured by Toho Chemical Industry Co., Ltd.; methacryloyloxyethyl phosphate; containing one phosphoric acid group and one methacryloyl group in one molecule; corresponds to a hydrophilic monomer)
- AQUALON (registered trademark) KH-10 (manufactured by Daiichi Kogyo Seiyaku Co., Ltd.; ammonium polyoxyethylene-1-(allyloxymethyl) alkyl ether sulfate; vinyl group-containing ammonium alkyl ether sulfate; corresponds to a hydrophilic monomer)
- IRGACURE (registered trademark) 184 (manufactured by BASF SE; 1-hydroxy cyclohexyl phenyl ketone; corresponds to an alkylphenone-based photopolymerization initiator)
- MFG (registered trademark) (manufactured by Nippon Nyukazai Co., Ltd.; methylpropylene glycol; corresponds to a glycol ether-based solvent)

[Table 1]

| | NK ESTER (mass %) A-9550 | NK ESTER A-GLY-9E (mass%) | LIGHT mass %) ACRYLATE 130A | 3-Sulfopropyl acrylate potassium (mass%) | PPME (mass %) | AQUALON KH-10 (mass%) | Irgacure 184 (mass%) | Total solid content (mass%) | MFG (mass %) |
|---|---|---|---|---|---|---|---|---|---|
| Mixture A | 51.3 | 12.8 | | 0.5 | | | 1.9 | 66.5 | 33.5 |
| Mixture B | 51.5 | 12.9 | | 0.2 | | | 1.9 | 66.5 | 33.5 |
| Mixture C | 51.3 | 12.8 | | | 0.5 | | 1.9 | 66.5 | 33.5 |
| Mixture D | 51.3 | 12.8 | | | | 0.5 | 1.9 | 66.5 | 33.5 |
| Mixture E | 51.7 | 12.9 | | | | | 1.9 | 66.5 | 33.5 |
| Mixture F | 64.1 | | | 0.5 | | | 1.9 | 66.5 | 33.5 |
| Mixture G | 51.3 | | 12.8 | 0.5 | | | 1.9 | 66.5 | 33.5 |
| Mixture H | 64.6 | | | | | | 1.9 | 66.5 | 33.5 |

In the table shown above, the unit "mass%" represents the percentage (%) by mass with respect to the total mass of the mixture.

[Production of antibacterial composition]

The various components described in Table 2 were mixed, and thereby the antibacterial compositions related to various Examples and Comparative Examples were produced. The various components in the table are as follows.

- NOVALON AG300 (manufactured by Toagosei Co., Ltd.; Zr-based Ag phosphate; silver content is 3% by mass; corresponds to a silver-based antibacterial agent; corresponds to a silver phosphate antibacterial agent; solid content 100% by mass)
- BACTERITE MP102SVC13 (manufactured by Fuji Chemical Industries Co., Ltd.; CaZn-based Ag phosphate; silver content is 1% by mass; corresponds to a silver-based antibacterial agent; corresponds to a silver phosphate antibacterial agent; solid content 25% by mass)
- ZEOMIC AW10N (manufactured by Sinanen Zeomic Co., Ltd.; zeolite-based Ag; percentage content of silver is 0.5% by mass; corresponds to a silver-based antibacterial agent; corresponds to a silver zeolite antibacterial agent; solid content 100% by mass)
- IONPURE WPA (manufactured by Ishizuka Glass Co., Ltd.; glass-based Ag; percentage content of silver is 1.6% by mass; corresponds to a silver-based antibacterial agent; solid content 100% by mass)
- NOVALON VZ100 (manufactured by Toagosei Co., Ltd.; glass-based Zn; corresponds to an antibacterial agent different from a silver-based antibacterial agent; solid content 100% by mass)
- A-H (corresponds to monomer mixtures A to H in Table 1)
- AICA AITRON Z-949-1L (manufactured by Aica Kogyo Co., Ltd.; containing a hydrophilic monomer, a monomer that does not contain a hydrophilic group, and a polymerization initiator; solid content 30% by mass)
- BYK-D410 (manufactured by BYK Chemie GmbH; modified urea urethane compound; corresponds to a water-insoluble nitrogen-containing compound; contains a urethane bond; corresponds to a thickening agent; solid content 52% by mass)
- DISPARLON PFA-231 (manufactured by Kusumoto Chemicals, Ltd.; aliphatic amide compound; corresponds to a water-insoluble nitrogen-containing compound; corresponds to a thickening agent; solid content 20% by mass)
- TINUVIN PS (manufactured by BASF SE; modified benzotriazole; corresponds to a water-insoluble nitrogen-containing compound; containing no urethane bond; not corresponding to a thickening agent; solid content 10% by mass (diluted with isopropyl alcohol))
- DISPARLON 4200-20 (manufactured by Kusumoto Chemicals, Ltd.; polyolefin was; not corresponding to a water-insoluble nitrogen-containing compound (water-insoluble, but does not contain a nitrogen atom); solid content 20% by mass)
- DISPERBYK-180 (manufactured by BYK Chemie GmbH; alkylolammonium salt; corresponds to a dispersant; solid content 50% by mass (diluted with isopropyl alcohol))
- Sodium 3-mercapto-1-propanesulfonate (manufactured by Tokyo Chemical Industry Co., Ltd.; corresponds to a discoloration inhibitor; solid content 100% by mass)
- TOKUSO IPA (isopropyl alcohol) SE (trade name) (manufactured by Tokuyama Corporation; corresponds to an alcohol-based solvent)

[Table 2]

| | Silver-based antibacterial agent and antibacterial agent | | | | | Hydrophilic monomer and monomer that does not contain hydrophilic group | | | | | | | | | Water-insoluble nitrogen-containing compound | | | Not containing nitrogen atom, being water-insoluble (not corresponding to water-insoluble, nitrogen-containing compound) | Dispersant | Discoloration inhibitor | Solvent |
|---|---|---|---|---|---|---|---|---|---|---|---|---|---|---|---|---|---|---|---|---|---|
| | | | | | | | | | | | | | | | Corresponding to thickening agent | | Not corresponding to thickening agent | | | | |
| | NOVALON AG300 | BACTERITE MP102SVC13 | ZEOMIC AW10N | IONPURE WPA | NOVALON VZ100 | A | B | C | D | E | F | G | H | AICA AITRON Z-949-1L | BYK-D410 | DISPARLON PFA-231 | TINUVIN PS | DISPARLON 4200-20 | DISPERBY K-180 | Sodium 3-mercapto-1-propanesulfonate | TOKUSO IPA SE |
| Example 1 | 2.0 | | | | | 59.7 | | | | | | | | | 7.8 | | | | 0.7 | | 29.8 |
| Example 2 | 2.0 | | | | | 59.7 | | | | | | | | | 5.8 | | | | 0.7 | | 31.8 |
| Example 3 | 2.0 | | | | | 59.7 | | | | | | | | | 2.3 | | | | 0.7 | | 35.3 |
| Example 4 | 2.0 | | | | | 59.7 | | | | | | | | | 1.0 | | | | 0.7 | | 36.7 |
| Example 5 | 2.0 | | | | | 59.7 | | | | | | | | | 0.4 | | | | 0.7 | | 37.2 |
| Example 6 | 2.0 | | | | | 59.7 | | | | | | | | | 0.3 | | | | 0.7 | | 37.3 |
| Example 7 | 2.0 | | | | | 59.7 | | | | | | | | | | 2.5 | | | 0.7 | | 35.2 |
| Example 8 | | 24.2 | | | | 59.7 | | | | | | | | | 1.0 | | | | 0.7 | | 14.4 |
| Example 9 | | | 12.1 | | | 59.7 | | | | | | | | | 1.0 | | | | 0.7 | | 26.6 |
| Example 10 | | | | 3.8 | | 59.7 | | | | | | | | | 1.0 | | | | 0.7 | | 34.9 |
| Example 11 | 2.0 | | | | | | 59.7 | | | | | | | | 1.0 | | | | 0.7 | | 36.7 |
| Example 12 | 2.0 | | | | | | | 59.7 | | | | | | | 1.0 | | | | 0.7 | | 36.7 |
| Example 13 | 2.0 | | | | | | | | 59.7 | | | | | | 1.0 | | | | 0.7 | | 36.7 |
| Example 14 | 2.0 | | | | | | | | | 59.7 | | | | | 1.0 | | | | 0.7 | | 36.7 |
| Example 15 | 2.0 | | | | | | | | | | 59.7 | | | | 1.0 | | | | 0.7 | | 36.7 |
| Example 16 | 2.0 | | | | | | | | | | | 59.7 | | | 1.0 | | | | 0.7 | | 36.7 |
| Example 17 | 1.2 | | | | | | | | | | | | | 76.7 | 0.6 | | | | 0.7 | | 21.2 |
| Example 18 | 2.0 | | | | | 59.7 | | | | | | | | | 1.0 | | | | 0.7 | | 36.7 |
| Example 19 | 2.0 | | | | | 59.7 | | | | | | | | | 1.0 | | | | 0.7 | | 36.7 |
| Example 20 | 2.0 | | | | | 59.7 | | | | | | | | | 1.0 | | | | 0.7 | | 36.7 |
| Example 21 | 2.0 | | | | | 59.7 | | | | | | | | | 1.0 | | | | 0.7 | | 36.7 |
| Example 22 | 2.0 | | | | | 59.7 | | | | | | | | | | | 5.0 | | 0.7 | | 32.6 |
| Comparative Example 1 | | | | | | 60.9 | | | | | | | | | 1.0 | | | | 0.7 | | 37.4 |
| Comparative Example 2 | | | | | 2.0 | 59.7 | | | | | | | | | 1.0 | | | | 0.7 | | 36.7 |
| Comparative Example 3 | 2.0 | | | | | | | | | | | | 59.7 | | 1.0 | | | | 0.7 | | 36.7 |
| Comparative Example 4 | 2.0 | | | | | 59.7 | | | | | | | | | | | | | 0.7 | | 37.6 |
| Comparative Example 5 | 2.0 | | | | | 59.7 | | | | | | | | | | | | 2.5 | 0.7 | | 35.2 |
| Comparative Example 6 | 2.0 | | | | | 59.7 | | | | | | | | | | | | 2.5 | 0.7 | 0.5 | 34.7 |

In Table 2, the contents (values in the table) of the various components are expressed in percentage (%) by mass with respect to the total mass of the antibacterial composition.

[Production of antibacterial film-attached substrate]

Antibacterial film-attached substrates were obtained by the following method using the antibacterial compositions described in various Examples and Comparative Examples.

The antibacterial compositions were applied on the surface of a PET (polyethylene terephthalate) sheet (COSMOSHINE A4300 manufactured by Toyobo Co., Ltd.) so as to obtain antibacterial films having the film thicknesses described in the respective columns of Table 3, and the antibacterial compositions were dried for 2 minutes at 120°C. Subsequently, the hydrophilic monomers and the like were cured by irradiating the antibacterial compositions with UV (ultraviolet), and thus, antibacterial film-attached substrates were formed.

[Evaluation of performance of antibacterial film]

The performance of the antibacterial films was evaluated by the following methods. The results are shown in Table 3-1 and Table 3-2.

[Stability of antibacterial composition: discoloration]

80 ml of an antibacterial composition was introduced into a vial having a capacity of 100 ml, and the vial was left to stand in a constant temperature chamber at 25°C. Discoloration of the antibacterial composition after a lapse of 24 hours and 48 hours was evaluated by visual inspection.

The results were evaluated according to the following criteria. For practical use, grade "A" or "B" is preferable.

(Evaluation criteria)

A: After standing for 48 hours, discoloration of the antibacterial composition was not observed.

B: After standing for 24 hours, discoloration of the antibacterial composition was not observed; however, after standing for 48 hours, discoloration of the antibacterial composition was observed.

C: After standing for 24 hours, discoloration of the antibacterial composition was observed.

[Stability of antibacterial composition: sedimentation]

80 ml of an antibacterial composition was introduced into a vial having a capacity of 100 ml, and the vial was left to stand for 24 hours in a constant temperature chamber at 25°C. Subsequently, an observation was made to check whether the antibacterial composition underwent separation to produce a supernatant. The height of the supernatant portion from the liquid surface of the antibacterial composition was measured.

The sedimentation characteristics were evaluated based on the following criteria. For practical use, grade "A" or "B" is preferred.

(Evaluation criteria)

A: The height of the supernatant portion was 5 mm or less.
B: The height of the supernatant portion was more than 5 mm and 10 mm or less.
C: The height of the supernatant portion was more than 10 mm.

[Sustainability of antibacterial action: controlled release characteristics of silver ion]

The amount of silver ions eluted from an antibacterial film was evaluated by the following method.

The 1/500 common bouillon medium specified in JIS Z 2801:2010 was used as an extraction liquid. The temperature of this extraction liquid was controlled to 35 ± 1°C, and the antibacterial film (area of antibacterial film: 4 $cm^2$ (2 cm × 2 cm)) in an antibacterial film-attached substrate was brought into contact with the extraction liquid (liquid amount; 9 mL) for 5 minutes. Regarding the method for bringing the antibacterial film into contact with the extraction liquid, a method of immersing the antibacterial film-attached substrate in the extraction liquid was employed.

After the antibacterial film-attached substrate was contacted with the extraction liquid for 5 minutes, the antibacterial film-attached substrate was collected from the extraction liquid, and the amount of silver ions (ng) extracted into the extraction liquid was measured. Measurement of the amount of silver ions in the extraction liquid was carried out using an atomic absorption analytical apparatus (contrAA 700 manufactured by Analytik Jena AG), and the amount of silver ions was determined from a calibration curve that had been produced in advance. Next, the amount of silver ions thus obtained was divided by the contact area (4 $cm^2$) between the antibacterial film and the extraction liquid, and thereby the amount of silver ions per unit area (ng/$cm^2$) was calculated. The contact area between the antibacterial film and the extraction liquid is intended to mean the area of the antibacterial film surface brought into contact with the extraction liquid at the time of contacting the antibacterial film and the extraction liquid.

The results were evaluated according to the following criteria. For practical use, grade "A" or "B" is preferable.

(Evaluation criteria)

A: The amount of silver ions eluted at the time of contacting with the extraction liquid for 5 minutes was 10 ng/$cm^2$ or less.
B: The amount of silver ions eluted at the time of contacting with the extraction liquid for 5 minutes was more than 10 ng/$cm^2$ and 15 ng/$cm^2$ or less.
C: The amount of silver ions eluted at the time of contacting with the extraction liquid for 5 minutes was more than 15 ng/$cm^2$.

A test similar to the test described above was carried out by changing the contact time to 30 minutes.

The amount of elution in the case of changing the contact time to 30 minutes was determined by subtracting the value of the amount of eluted silver ions obtained in the case of setting the contact time to 5 minutes, from the value of the amount of eluted silver ions obtained in the case of setting the contact time to 30 minutes.

That is, the results for the "contact time of 30 minutes" shown in Table 3-1 and Table 3-2 represent the amounts of silver ions eluted for a contact time of longer than 5 minutes and a contact time of 30 minutes or shorter.

The results were evaluated according to the following criteria. For practical use, grade "A" or "B" is preferable.

(Evaluation criteria)

A: The amount of silver ions eluted at the time of contacting with the extraction liquid for 30 minutes was 20 ng/cm$^2$ or more.

B: The amount of silver ions eluted at the time of contacting with the extraction liquid for 30 minutes was 15 ng/cm$^2$ or more and less than 20 ng/cm$^2$.

C: The amount of silver ions eluted at the time of contacting with the extraction liquid for 30 minutes was less than 15 ng/cm$^2$.

[Antibacterial properties]

A test was carried out according to JIS-Z-2801: 2010, using Escherichia coli as a test bacterium and by changing the time of contacting with the bacterial solution to 3 hours. The number of bacterial cells (cells/cm$^2$) after the test was measured, and evaluation was performed according to the following criteria. For practical use, grade "A" or "B" is preferable.

(Evaluation criteria)

A: The number of live bacterial cells was fewer than 5 cells/cm$^2$.

B: The number of live bacterial cells was 5 cells/cm$^2$ or more and fewer than 10 cells/cm$^2$.

C: The number of live bacterial cells was 10 cells/cm$^2$ or more.

[Hard coating performance]

The hard coating performance of an antibacterial film was evaluated by the following method.

The pencil hardness of the antibacterial film of an antibacterial film-attached substrate was measured using a pencil scratch hardness tester ("553-M" manufactured by Yasda Precision Tools K.K.). The test was carried out according to JIS K 5600.

The results were evaluated based on the following criteria. For practical use, grade "A" or "B" is preferable.

(Evaluation criteria)

A: The pencil hardness of the antibacterial film was 2H or higher.

B: The pencil hardness of the antibacterial film was H or higher and lower than 2H.

C: The pencil hardness of the antibacterial film was lower than H.

[Curling resistance]

A specimen was obtained by cutting out the antibacterial film-attached substrate into a square that measured 10 cm on each side. The specimen was left at rest on a flat stand, and the lifting of four corners was respectively measured. The maximum value was designated as curl value.

The curling resistance was evaluated according to the following criteria. For practical use, grade "A" or "B" is preferable.

(Evaluation criteria)

A: The curl value was 10 mm or less.

B: The curl value was more than 10 mm and 15 mm or less.

C: The curl value was more than 15 mm.

[Table 3-1]

| | Antibacterial composition | | | | | | Antibacterial film-attached substrate | | | | | | | | | | |
|---|---|---|---|---|---|---|---|---|---|---|---|---|---|---|---|---|---|
| | Solid content [mass%] | Content of silver [mass%] | Silver/water-insoluble nitrogen-containing compound | Discoloration | Sedimentation [mm] | | Film thickness of antibacterial film [μm] | Controlled release characteristics of silver ions: Amount of eluted silver ions [ng/cm$^2$], Contact time 5 min | | Contact time 30 min | | Antibacterial properties (Number of live bacterial cells) [cells/ cm$^2$] | | Hard coating performance: Pencil hardness | | Curling resistance: Curl value [mm] | |
| Example 1 | 46.1 | 0.06 | 0.015 | A | 1 | A | 6 | 2.1 | A | 15.4 | B | 8.1 | B | 3H | A | 5 | A |
| Example 2 | 45.1 | 0.06 | 0.02 | A | 2 | A | 6 | 5.0 | A | 21.3 | A | <0.63 | A | 3H | A | 5 | A |
| Example 3 | 43.3 | 0.06 | 0.05 | A | 2 | A | 6 | 5.6 | A | 24.2 | A | <0.63 | A | 3H | A | 5 | A |
| Example 4 | 42.6 | 0.06 | 0.12 | A | 4 | A | 6 | 7.5 | A | 25.0 | A | <0.63 | A | 3H | A | 5 | A |
| Example 5 | 42.3 | 0.06 | 0.3 | A | 5 | A | 6 | 9.2 | A | 22.9 | A | <0.63 | A | 3H | A | 5 | A |
| Example 6 | 42.2 | 0.06 | 0.35 | B | 9 | B | 6 | 13.4 | B | 15.7 | B | 7.7 | B | 3H | A | 5 | A |
| Example 7 | 42.6 | 0.06 | 0.12 | B | 4 | A | 6 | 12.0 | B | 18.9 | B | 4.1 | A | 3H | A | 5 | A |
| Example 8 | 46.6 | 0.24 | 0.485 | A | 4 | A | 6 | 7.9 | A | 24.1 | A | <0.63 | A | 3H | A | 5 | A |
| Example 9 | 52.7 | 0.06 | 0.12 | A | 4 | A | 6 | 7.2 | A | 24.8 | A | <0.63 | A | 3H | A | 5 | A |
| Example 10 | 44.3 | 0.06 | 0.11 | B | 4 | A | 6 | 11.6 | B | 20.9 | A | <0.63 | A | 3H | A | 5 | A |
| Example 11 | 42.6 | 0.06 | 0.12 | A | 4 | A | 6 | 7.1 | A | 23.1 | A | <0.63 | A | 3H | A | 5 | A |
| Example 12 | 42.6 | 0.06 | 0.12 | A | 4 | A | 6 | 7.5 | A | 24.2 | A | <0.63 | A | 3H | A | 5 | A |

(continued)

| | Antibacterial composition | | | | | | Antibacterial film-attached substrate | | | | | | | | | | |
|---|---|---|---|---|---|---|---|---|---|---|---|---|---|---|---|---|---|
| | Solid content [mass%] | Content of silver [mass%] | Silver/water-insoluble nitrogen-containing compound | Discoloration | Sedimentation [mm] | | Film thickness of antibacterial film [μm] | Controlled release characteristics of silver ions | | | | Antibacterial properties | | Hard coating performance | | Curling resistance | |
| | | | | | | | | Amount of eluted silver ions [ng/cm$^2$] | | | | (Number of live bacterial cells) [cells/ cm$^2$] | | Pencil hardness | | Curl value [mm] | |
| | | | | | | | | Contact time 5 min | | Contact time 30 min | | | | | | | |
| Example 13 | 42.6 | 0.06 | 0.12 | A | 4 | A | 6 | 7.9 | A | 22.9 | A | <0.63 | A | 3H | A | 5 | A |
| Example 14 | 42.6 | 0.06 | 0.12 | A | 4 | A | 6 | 5.6 | A | 16.0 | B | 6.9 | B | 3H | A | 5 | A |
| Example 15 | 42.6 | 0.06 | 0.12 | A | 4 | A | 6 | 5.1 | A | 16.6 | B | 5.5 | B | H | B | 13 | B |
| Example 16 | 42.6 | 0.06 | 0.12 | A | 4 | A | 6 | 6.5 | A | 20.6 | A | 3.3 | A | H | B | 12 | B |
| Example 17 | 24.6 | 0.04 | 0.12 | A | 4 | A | 6 | 7.3 | A | 23.5 | A | <0.63 | A | 3H | A | 5 | A |
| Example 18 | 42.6 | 0.06 | 0.12 | A | 4 | A | 0.5 | 7.5 | A | 23.2 | A | <0.63 | A | H | B | 2 | A |
| Example 19 | 42.6 | 0.06 | 0.12 | A | 4 | A | 1 | 7.2 | A | 24.2 | A | <0.63 | A | 2H | A | 3 | A |
| Example 20 | 42.6 | 0.06 | 0.12 | A | 4 | A | 10 | 7.7 | A | 24.1 | A | <0.63 | A | 3H | A | 10 | A |
| Example 21 | 42.6 | 0.06 | 0.12 | A | 4 | A | 12 | 6.9 | A | 25.0 | A | <0.63 | A | 3H | A | 15 | B |
| Example 22 | 42.6 | 0.06 | 0.12 | B | 10 | B | 6 | 12.5 | B | 18.4 | B | 4.2 | A | 3H | A | 5 | A |

[Table 3-2]

| | Antibacterial composition | | | | | | Antibacterial film-attached substrate | | | | | | | | | | |
|---|---|---|---|---|---|---|---|---|---|---|---|---|---|---|---|---|---|
| | Solid content [mass%] | Silver content [mass%] | Silver/water-insoluble nitrogen-containing compound | Discoloration | Sedimentation [mm] | | Film thickness of antibacterial film [μm] | Controlled release characteristics of silver ions: Amount of eluted silver ions [ng/cm$^2$] | | | | Antibacterial properties (Number of live bacterial cells) [cells/cm$^2$] | | Hard coating performance: Pencil hardness | | Curling resistance: Curl value [mm] | |
| | | | | | | | | Contact time 5 min | | Contact time 30 min | | | | | | | |
| Comparative Example 1 | 41.4 | 0 | | A | 0 | A | 6 | 0.0 | A | 0.0 | C | $1.2\times10^4$ | C | 3H | A | 5 | A |
| Comparative Example 2 | 42.6 | 0 | | A | 4 | A | 6 | 0.0 | A | 0.0 | C | $1.6\times10^2$ | C | 3H | A | 5 | A |
| Comparative Example 3 | 42.6 | 0.06 | 0.12 | A | 4 | A | 6 | 5.5 | A | 8.6 | C | $2.5\times10^2$ | C | 3H | A | 5 | A |
| Comparative Example 4 | 42.1 | 0.06 | | C | 20 | C | 6 | 18.1 | C | 6.9 | C | $1.1\times10^2$ | C | 3H | A | 5 | A |
| Comparative Example 5 | 42.6 | 0.06 | | C | 4 | A | 6 | 17.5 | C | 7.7 | C | $1.5\times10^2$ | C | 3H | A | 5 | A |
| Comparative Example 6 | 43.1 | 0.06 | | A | 4 | A | 6 | 17.6 | C | 7.0 | C | $1.2\times10^2$ | C | 3H | A | 5 | A |

From the results shown in Fig. 3-1, it was understood that the antibacterial compositions of Examples, each including an antibacterial agent containing silver, a monomer containing a hydrophilic group, and a water-insoluble nitrogen-containing compound, exhibit desired effects. Meanwhile, it was understood from the results shown in Table 3-2 that the antibacterial compositions of Comparative Examples do not have the above-described effects.

The antibacterial film produced using the antibacterial composition of Example 2, in which the mass ratio of the content of silver with respect to the content of the water-insoluble nitrogen-containing compound in the antibacterial composition was 0.02 to 0.3, exhibited superior controlled release characteristics of silver ions and superior antibacterial properties, compared to the antibacterial film produced using the antibacterial composition of Example 1. The antibacterial composition of Example 2 had superior stability compared to the antibacterial composition of Example 6, and the antibacterial film thus obtainable had superior controlled release characteristics of silver ions and superior antibacterial properties.

The antibacterial compositions of Example 4 and Example 7, in which the water-insoluble nitrogen-containing compound was a thickening agent, had superior stability (more difficult to be settled) compared to the antibacterial composition of Example 22.

The antibacterial composition of Example 4 in which the water-insoluble nitrogen-containing compound had a urethane bond, had superior stability (more difficult to be discolored) compared to the antibacterial composition of Example 7. The antibacterial film obtainable therefrom had superior controlled release characteristics of silver ions.

The antibacterial compositions of Examples 8 and 9, in which the antibacterial agent containing silver was a silver phosphate antibacterial agent or a silver zeolite antibacterial agent, had superior stability (more difficult to be discolored) compared to the antibacterial composition of Example 10, and the antibacterial films obtainable therefrom had superior controlled release characteristics of silver ions.

The antibacterial composition of Example 4 comprising two or more kinds of monomers containing a hydrophilic group was such that the antibacterial film obtainable therefrom had superior controlled release characteristics of silver ions and had superior antibacterial properties, compared to the antibacterial composition of Example 14.

The antibacterial composition of Example 4, in which at least one of the monomers containing a hydrophilic group contained at least one polyoxyalkylene group and two or more polymerizable groups in one molecule, was such that the antibacterial film obtainable therefrom exhibited superior hard coating performance and superior curling resistance compared to the antibacterial composition of Example 16.

The antibacterial films of Example 19 and Example 20 having a film thickness of 1 to 10 μm had superior hard coating performance compared to the antibacterial film of Example 18, and had superior curling resistance compared to the antibacterial film of Example 21.

## Claims

1. An antibacterial composition comprising:

   an antibacterial agent containing silver;
   a monomer containing a hydrophilic group; and
   a water-insoluble nitrogen-containing compound.

2. The antibacterial composition according to claim 1, wherein the mass ratio of the content of silver with respect to the content of the water-insoluble nitrogen-containing compound is 0.02 to 0.3.

3. The antibacterial composition according to claim 1 or 2, wherein in a case in which the water-insoluble nitrogen-containing compound is dissolved in propylene glycol monomethyl ether to obtain a solution having a solid content of 1% by mass, the viscosity of the solution at 25°C measured using a rotary viscometer is 10 mPa·s or higher.

4. The antibacterial composition according to any one of claims 1 to 3, wherein the water-insoluble nitrogen-containing compound contains a urethane bond.

5. The antibacterial composition according to any one of claims 1 to 4, wherein the antibacterial agent containing silver contains a carrier and silver supported on the carrier, and the carrier is at least one selected from the group consisting of a phosphoric acid salt and a zeolite.

6. The antibacterial composition according to any one of claims 1 to 5, wherein two or more kinds of the monomers containing a hydrophilic group are provided.

7. The antibacterial composition according to claim 6, wherein at least one kind of the monomers containing a hydrophilic group contains at least one polyoxyalkylene group and two or more polymerizable groups in one molecule.

8. The antibacterial composition according to any one of claims 1 to 6, wherein the monomer containing a hydrophilic group contains at least one polyoxyalkylene group and two or more polymerizable groups in one molecule.

9. An antibacterial film obtainable by curing the antibacterial composition according to any one of claims 1 to 8.

10. The antibacterial film according to claim 9, wherein the film thickness is 1 to 10 μm.

11. An antibacterial film-attached substrate, comprising a substrate and the antibacterial film according to claim 9 or 10.

12. A method for producing an antibacterial film, the method comprising:

applying the antibacterial composition according to any one of claims 1 to 8 on the surface of a substrate to form an antibacterial composition layer; and
curing the antibacterial composition layer to obtain an antibacterial film.

13. A method for producing an antibacterial film-attached substrate, the method comprising:
forming the antibacterial film according to claim 9 or 10 on the surface of a substrate.

14. The method for producing an antibacterial film-attached substrate according to claim 13, wherein forming the antibacterial film is applying the antibacterial composition according to any one of claims 1 to 8 on the surface of the substrate to form an antibacterial composition layer, and curing the antibacterial composition layer to obtain an antibacterial film.

## INTERNATIONAL SEARCH REPORT

International application No.
PCT/JP2017/020801

A. CLASSIFICATION OF SUBJECT MATTER
*A01N59/16*(2006.01)i, *A01N25/34*(2006.01)i, *A01P3/00*(2006.01)i, *B32B27/18*(2006.01)i

According to International Patent Classification (IPC) or to both national classification and IPC

B. FIELDS SEARCHED

Minimum documentation searched (classification system followed by classification symbols)
A01N59/16, A01N25/34, A01P3/00, B32B27/18, C09D4/00-4/06

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | WO 2015/111500 A1 (DIC Corp.), 30 July 2015 (30.07.2015), paragraph [0052]; examples & US 2016/0333131 A1 paragraph [0070]; examples | 1-14 |
| X<br>A | JP 2001-278926 A (Osaka Gas Co., Ltd.), 10 October 2001 (10.10.2001), examples (Family: none) | 1-3,9-14<br>4-8 |
| X | JP 2012-158116 A (NISSHA Printing Co., Ltd.), 23 August 2012 (23.08.2012), claim 1; paragraphs [0032] to [0035], [0052]; examples (Family: none) | 1-14 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 23 August 2017 (23.08.17) | 05 September 2017 (05.09.17) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

**INTERNATIONAL SEARCH REPORT**

International application No.
PCT/JP2017/020801

C (Continuation). DOCUMENTS CONSIDERED TO BE RELEVANT

| Category* | Citation of document, with indication, where appropriate, of the relevant passages | Relevant to claim No. |
|---|---|---|
| X<br>A | JP 06-172686 A (Kabushiki Kaisha Tokyo Keikaku),<br>21 June 1994 (21.06.1994),<br>examples<br>(Family: none) | 1-4,6-8<br>5,9-14 |
| A | JP 2015-189196 A (Fujifilm Corp.),<br>02 November 2015 (02.11.2015),<br>& WO 2015/147206 A1 & US 2017/0013842 A1<br>& EP 3124237 A1 & TW 201536549 A<br>& CN 106163802 A | 1-14 |
| A | WO 2015/178166 A1 (Fujifilm Corp.),<br>26 November 2015 (26.11.2015),<br>& US 2017/0066929 A1 & EP 3146899 A1<br>& CN 106413557 A | 1-14 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2015189196 A